(19) **Europäisches Patentamt / European Patent Office / Office européen des brevets**

(11) **EP 1 514 138 B1**

(12) **FASCICULE DE BREVET EUROPEEN**

(45) Date de publication et mention
de la délivrance du brevet:
**21.11.2018 Bulletin 2018/47**

(21) Numéro de dépôt: **03760721.5**

(22) Date de dépôt: **11.06.2003**

(51) Int Cl.:
***G01V 1/30*** *(2006.01)*

(86) Numéro de dépôt international:
**PCT/FR2003/001753**

(87) Numéro de publication internationale:
**WO 2004/001450 (31.12.2003 Gazette 2004/01)**

(54) **PROCEDE, DISPOSITIF ET PRODUIT-PROGRAMME D'ORDINATEUR POUR EXTRAIRE UN HORIZON GEOLOGIQUE ET DES PROPRIETES ASSOCIEES**

VERFAHREN, SYSTEM UND COMPUTERPROGRAMMPRODUKT ZUR AUFFINDUNG EINES GEOLOGISCHEN HORIZONTES UND DESSEN EIGENSCHAFTEN

METHOD, DEVICE AND COMPUTER PROGRAM PRODUCT FOR EXTRACTING A GEOLOGICAL HORIZON AND RELATED PROPERTIES

(84) Etats contractants désignés:
**AT BE BG CH CY CZ DE DK EE ES FI FR GB GR HU IE IT LI LU MC NL PT RO SE SI SK TR**

(30) Priorité: **19.06.2002 FR 0207596**

(43) Date de publication de la demande:
**16.03.2005 Bulletin 2005/11**

(73) Titulaire: **Paradigm France
54000 Nancy (FR)**

(72) Inventeurs:
• **DULAC, Jean-Claude
Sugarland, TX 77479 (US)**
• **BOSQUET, Fabien
F-54000 NANCY (FR)**
• **LABRUNYE, Emmanuel
F-54000 Nancy (FR)**

(74) Mandataire: **Lebkiri, Alexandre et al
Cabinet Camus Lebkiri
25, Rue de Maubeuge
75009 Paris (FR)**

(56) Documents cités:
US-A- 4 672 546    US-A- 5 615 171
US-A- 5 930 730    US-A- 6 138 076
US-A- 6 151 555    US-A1- 2002 022 930

**Description**

L'invention est relative à un procédé pour extraire un horizon géologique et des propriétés associées à leur image déduite de données sismiques.

L'invention est également relative à un dispositif pour extraire un horizon géologique et des propriétés associées à leur image déduite de données sismiques.

L'invention est enfin relative à un produit-programme d'ordinateur pour extraire un horizon géologique et des propriétés associées à leur image déduite de données sismiques.

On connaît des procédés d'extraction d'horizon et de leurs attributs sismiques. Dans ces procédés connus, on construit une matrice d'attribut sismique tridimensionnelle de même taille et de même échantillonnage que la matrice sismique tridimensionnelle initiale.

Pour attribuer à chaque point de l'horizon une valeur d'un attribut sismique, on peut procéder soit par interpolation des noeuds environnants de la matrice d'attribut sismique tridimensionnelle ou choisir la valeur stockée dans le noeud le plus proche de la matrice d'attribut sismique tridimensionnelle.

En cas d'interpolation, le pré-traitement correspondant nécessite un temps de traitement important et une quantité de mémoire disponible très importante ; c'est pourquoi il est généralement nécessaire d'effectuer ce pré-traitement sur un ordinateur puissant.

Dans le cas du choix de l'attribut du noeud le plus proche, ce pré-traitement n'est pas nécessaire, et la détermination de l'attribut ne peut être effectuée qu'à des points voisins des points du réseau de la matrice sismique tridimensionnelle originale.

Un inconvénient majeur de l'art antérieur est d'introduire des défauts ou artefacts qui induisent des erreurs verticales sur les horizons et les attributs sismiques et conduisent à une mauvaise interprétation géologique des mesures sismiques.

Le document US 5 615 171 intitulé « Method and apparatus for finding horizons in 3D seismic data » est connu de l'état de l'art.

Un premier but de l'invention est d'améliorer la technique connue en proposant un calcul direct et plus exact, en minimisant les risques d'erreurs possibles sur les attributs en tous points de l'horizon.

Un deuxième but de l'invention est de supprimer les erreurs verticales susceptibles de conduire à une mauvaise interprétation géologique.

L'invention a pour objet un procédé pour extraire un horizon géologique et des propriétés associées d'une représentation sismique selon la revendication 1.

Selon d'autres caractéristiques avantageuses de l'invention :

- on remplace successivement le contenu de la matrice bidimensionnelle de l'étape c) au cours des itérations successives d'extraction,
- à chaque itération, on utilise comme nouveaux points «graines» de l'étape d) tous les points correspondent à des emplacements de la matrice bidimensionnelle de l'étape c) remplis à l'itération précédente,

   -- la propriété de subsurface extraite est l'amplitude sismique réfléchie et captée par des géophones,

- on visualise sur un écran de visualisation des surfaces horizon peintes avec des couleurs correspondant a un codage des propriétés extraites.

L'invention est également relative à un dispositif selon la revendication 7.

Selon d'autres caractéristiques avantageuses de l'invention :

- le dispositif comporte des moyens de mémorisation et des moyens de visualisation de paramètres sismiques déterminés à l'aide du procédé selon l'invention.

L'invention a enfin pour objet un produit-programme d'ordinateur selon la revendication 9.

L'invention sera mieux comprise grâce à la description qui va suivre donnée à titre d'exemple non limitatif en référence aux dessins annexés dans lesquels :

- La figure 1 représente schématiquement une matrice sismique tridimensionnelle et une trace sismique locale continue.

- La figure 2 représente schématiquement, un exemple de voisinage local $N_{ij,k}$ consistant en un ensemble de trace sismique locale continues $S_{pq,k}(t)$ voisines de la trace centrale de référence $S_{ij,k}(t)$ elle même située a la verticale

du géophone $G_{ij}$ et interpolant les amplitudes sismiques autour de t=k.

- La figure 3 représente schématiquement, une section verticale de voisinage local conditionnel $N_{ij,k}(r)$ d'une trace sismique locale continue de référence $S_{ij,k}(t)$.

- La figure 4 représente schématiquement, une section verticale d'une matrice sismique tridimensionnelle avec un décalage optimal $h_{ij,pq,k}$ et un voisinage conditionnel $N_{ij,k}(r)$..

- La figure 5 représente schématiquement, une section verticale d'une matrice sismique tridimensionnelle analogue à la figure 4 avec présence d'une faille ou discontinuité

- La figure 6 représente schématiquement un organigramme fonctionnel d'un procédé selon l'invention.

- La figure 7 représente schématiquement, une vue partielle agrandie d'une matrice sismique tridimensionnelle présentant une discontinuité et illustrant la mise en oeuvre du procédé selon l'invention.

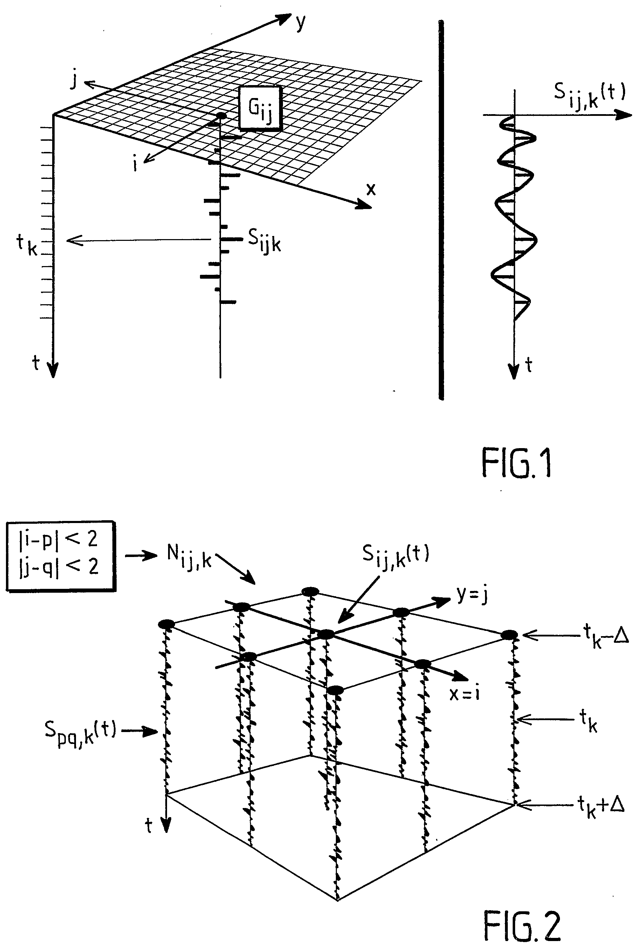

En référence aux figures 1 à 5, les éléments identiques ou fonctionnellement équivalents sont désignés ou repérés de manière identique.

Sur la figure 1, une matrice sismique tridimensionnelle est obtenue par relevé de mesures enregistrées par des géophones $G_{ij}$ disposés sur un réseau x,y en des points de coordonnées i, j. Le relevé des mesures échantillonnées dans le temps est représenté suivant un axe t descendant représentatif de la profondeur ou d'une verticale descendante à partir de la surface de la terre ou de la mer. Les mesures sont caractérisées par leur amplitude, par exemple une amplitude relevée par le géophone $G_{ij}$ au temps ou à la profondeur d'échantillonnage $t_k$. La mesure discrète effectuée par le géophone $G_{ij}$ au temps ou à la profondeur $t_k$ est appelée amplitude sismique $S_{ij,k}$.

L'ensemble des amplitudes sismiques correspondant à un géophone $G_{ij}$ de coordonnées i, j est une matrice unidimensionnelle $(S_{ij1}, S_{ij2},...., S_{ijk},...., S_{ijN})$ appelées trace sismique discrète, car cette matrice unidimensionnelle correspond à la trace selon le point de coordonnées horizontales i, j de la matrice sismique tridimensionnelle obtenue par mesures sismiques.

L'axe vertical t orienté selon une verticale descendante désigne usuellement le temps, mais peut également être traité pour représenter une profondeur à partir de la surface.

L'invention concerne aussi bien l'application à une troisième coordonnée t représentative du temps, qu'à une troisième coordonnée t représentative de la profondeur.

A partir de la trace sismique discrète située à la verticale d'un géophone $G_{ij}$ on définit, par interpolation ou approximation des valeurs discrètes autour de $t=t_k=k$, une fonction continue $S_{ij,k}(t)$ qui est désignée comme "trace sismique locale continue". Les méthodes d'approximation ou d'interpolation de valeurs discrètes pour engendrer une fonction continue sont nombreuses, et comprennent notamment les interpolations ou approximations polynomiales, ainsi que les interpolations ou approximations trigonométriques polynomiales.

Toute autre variante d'interpolation ou d'approximation fournissant une fonction continue peut également être appliquée à la présente invention pour fournir une "trace sismique locale continue".

Sur la figure 2, plusieurs traces sismiques locales continues définissent un voisinage d'une trace sismique locale continue "centrale" $S_{ij,k}(t)$ de référence. Le voisinage d'une trace sismique locale continue $S_{ij,k}(t)$ est défini comme l'ensemble des traces sismiques locales continues dont les indices spatiaux horizontaux p,q sont voisins des indices spatiaux horizontaux i, j de la trace sismique locale continue de référence.

A titre d'exemple, les coordonnées spatiales horizontales p,q correspondant au géophone $G_{pq}$ sont voisines des coordonnées spatiales horizontales i, j correspondant au géophone $G_{ij}$ si les valeurs absolues des différences i-p et j-q sont inférieures à des entiers donnés, par exemple à 2.

Dans ce cas, comme représenté à la figure 2, la trace sismique locale continue $S_{ij,k}(t)$ est associée à huit traces sismiques locales continues voisines entourant la trace sismique locale continue "centrale" $S_{ij,k}(t)$.

Dans le cas de traces sismiques locales continues produites par des mesures sismiques, le profil des horizons géologiques introduit des décalages verticaux entre des traces sismiques locales continues voisines. Dans le but de déterminer des relations entre deux traces sismiques continues locales voisines $S_{ij,k}(t)$ et $S_{pq,k}(t)$ centrées sur la même coordonnée verticale d'échantillonnage $t=t_k=k$ et correspondant à des coordonnées spatiales i, j et p,q différentes, on calcule la fonction de corrélation $R_{ij,pq,k}(h)$ des deux traces sismiques locales continues.

La fonction de corrélation de deux traces sismiques locales continues voisines est obtenue par la formule suivante

$$R_{ij,pq,k}(h) = \frac{C_{ij,pq,k}(h)}{\sqrt{C_{ij,ij,k}(0).C_{pq,pq,k}(0)}}$$

où le numérateur correspond à la fonction de covariance de $S_{ij,k}(t)$ et $S_{pq,k}(t)$ obtenue par l'expression suivante

$$C_{ij,pq,k}(h) = \int_{tk-\Delta}^{tk+\Delta} S_{ij,k}(t).S_{pq,k}(t+h).dt$$ . Dans cette intégrale définissant $C_{ij,pq,k}(h)$, le paramètre $\Delta$ définit une

« fenêtre verticale d'investigation » autour de $t=t_k=k$.

Par exemple, si les traces sismiques locales continues $S_{ij,k}(t)$ et $S_{pq,k}(t)$ sont des polynômes trigonométriques de la forme suivante interpolant les donnés sismiques

$$S_{ij,k}(t) = \sum_{s=1}^{m} a_s^{ij,k}.\cos(s\omega t) + b_s^{ij,k}.\sin(s\omega t)$$

$$S_{ij,k}(t) = \sum_{s=1}^{m} a_s^{ij,k}.\cos(s\omega t) + b_s^{ij,k}.\sin(s\omega t)$$

alors on peut montrer que la fonction de covariance $C_{ij,pq,k}(h)$ est elle même un polynôme trigonométrique de la forme suivante où les coefficients $A_s^{ij,pq,k}$ et $B_s^{ij,pq,k}$ dépendent des coefficients $a_s^{ij,k}$, $a_s^{pq,k}$, $b_s^{ij,k}$ et $b_s^{pq,k}$ :

$$C_{ij,pq,k}(h) = \sum_{s=1}^{m} A_s^{ij,pq,k}.\cos(s\omega h) + B_s^{ij,pq,k}.\sin(s\omega h)$$

Un résultat mathématique classique et connu est que la fonction de corrélation $R_{ij,pq,k}(h) = \dfrac{C_{ij,pq,k}(h)}{\sqrt{C_{ij,ij,k}(0).C_{pq,pq,k}(0)}}$

traduit une similarité des fonctions corrélées lorsque cette fonction de corrélation se rapproche de 1.

L'étude des fonctions de corrélation des traces sismiques locales continues $S_{ij,k}(t)$ et $S_{pq,k}(t)$ permet de définir comme décalage optimal la valeur $h_{ij,pq,k}$ de h correspondant au maximum de la fonction de corrélation $R_{ij,pq,k}(h)$, c'est-à-dire au maximum de la fonction de corrélation le plus proche de 1. Contrairement à l'art existant basé sur une formulation discrète de la fonction de corrélation $R_{ij,pq,k}(h)$, l'utilisation d'une formulation continue des traces sismiques et donc de la fonction de corrélation permet d'obtenir un décalage optimum qui n'est pas contraint à être un multiple entier du pas d'échantillonnage suivant l'axe vertical correspondant à la variable t.

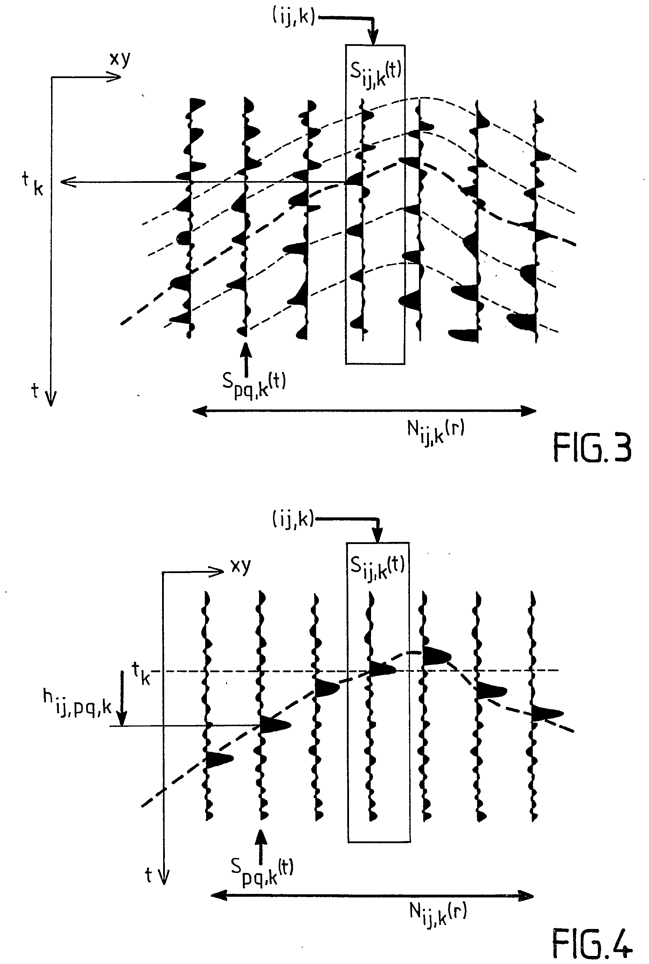

La définition du décalage optimal $h_{ij,pq,k}$ de deux traces sismiques locales continues voisines permet d'obtenir une première approximation des horizons passant par cette trace sismique locale continue de référence $S_{ij,k}(t)$, comme représenté aux figures 3 à 5. Contrairement à l'art existant, le fait d'utiliser des décalages optimaux qui ne sont pas contraint à être un multiple entier du pas d'échantillonnage suivant l'axe vertical permet d'éviter des erreurs connues sous le nom de «aliasing».

Sur ces figures 3 à 5, on définit un voisinage conditionnel $N_{ij,k}(r)$ de la trace sismique continue locale de référence $S_{ij,k}(t)$ qui est un sous-voisinage du voisinage initial des traces sismiques locales continues retenues pour le calcul de corrélation et de définition des décalages optimaux. Le voisinage conditionnel $N_{ij,k}(r)$ est choisi de manière que, pour toute trace sismique continue locale $S_{pq,k}(t)$ appartenant à $N_{ij,k}(r)$, le décalage optimal $h_{ij,pq,k}$ correspondant est tel que la corrélation $R_{ij,pq,k}(h_{ij,pq,k})$ entre $S_{ij,k}(t)$ et $S_{pq,k}(t)$ est supérieure à un seuil prédéterminé r compris entre 0 et 1.

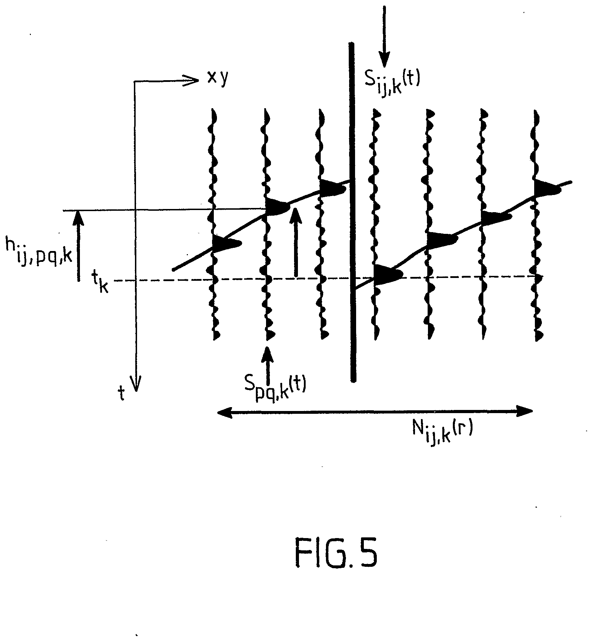

Comme on le voit sur la figure 5, la fixation du seuil r permet également d'englober dans un voisinage conditionnel une discontinuité ou une faille géologique, ce qui constitue un avantage important par rapport à l'art antérieur.

Les dispositions précitées fournissent ainsi une modélisation continue permettant la mise en oeuvre de l'invention.

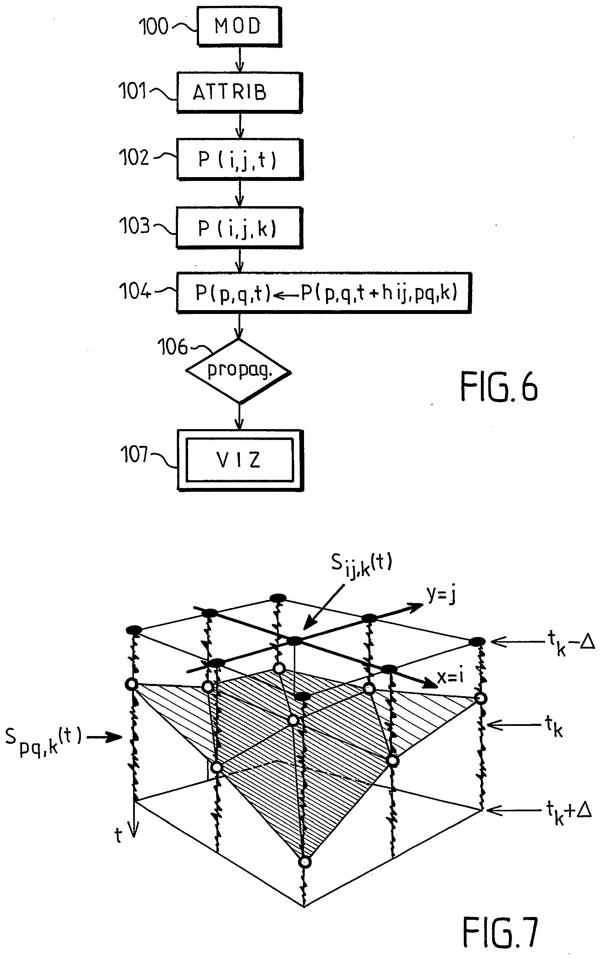

En référence à la figure 6, un procédé selon l'invention comporte une étape de modélisation numérique 100 pour définir des traces sismiques locales continues, des décalages optimaux et des voisinages conditionnels, comme décrit en référence aux figures 1 à 5.

A l'étape 101, on définit une matrice bidimensionnelle dont les indices de lignes et de colonnes correspondent aux coordonnées des géophones de mesures sismiques.

A l'étape 102, on choisit un point «graine» P(i,j,t) ou premier point d'extraction.

A l'étape 103, on détermine le noeud (i,j,k) de la matrice sismique tridimensionnelle le plus proche du point «graine» P(i,j,t).

Ce noeud a pour coordonnées spatiales i,j et pour coordonnée temporelle ou de profondeur la coordonnée $t_k$=k la plus voisine de la coordonnée t du point «graine» P(i,j,t) choisi à l'étape 102.

A l'étape 104, on sélectionne tout d'abord les traces sismiques continues locales $S_{pq,k}(t)$ appartenant au voisinage conditionnel $N_{ij,k}(r)$ défini à l'étape 100 et telles que les indices (p,q) correspondent a un emplacement vide de la matrice bidimentionnelle definie a l'étape 101.

Ensuite, pour chaque trace sismique continue locale $S_{pq,k}(t)$ ainsi sélectionnée, on attribue au point P(p,q,t) la valeur P(p,q,t + $h_{ij,pq,k}$), où $h_{ij,pq,k}$ est le décalage optimal du point P(p,q,t) par rapport au point voisin P(i,j,k) déterminé à l'étape 103. Ce point P(p,q,t + $h_{ij,pq,k}$) est considéré comme un nouveau point situé sur l'horizon et est stocké dans l'emplacement (p,q) de la matrice bidimensionnelle défini à l'étape 101.

Le procédé qui vient d'être décrit est destiné à déterminer un ensemble de points appartenant à l'horizon passant par un point P(i,j,t), mais est également applicable pour attacher à ces points, au fur et à mesure de leur détermination, un ensemble de propriétés caractérisant la nature physique des terrains au voisinage de l'horizon ainsi déterminé.

A cet effet, on peut prévoir d'attacher à chaque point P(p,q,t + $h_{ij,pq,k}$) de la matrice bidimensionnelle définie à l'étape 101 un ensemble de propriétés appelé "attributs sismiques".

Ces propriétés sont généralement représentées par des couleurs différentes sur les visualisations d'écran, de manière à permettre une visualisation rapide et sans risque d'erreur des propriétés associées à un horizon géologique.

En pratique, on effectue des étapes similaires aux étapes décrites en référence aux étapes 100 à 104 et l'on construit les attributs du point P(p,q,t + $h_{ij,pq,k}$) à l'aide de l'équation de la trace sismique continue locale $S_{pq,k}(t)$ ; par exemple on construit ainsi un attribut enveloppe, un attribut phase ou un attribut fréquence, de manière connue en soi, par exemple d'après l'enseignement du document de TANER M.T., KOEHLER F.,SHERIFF R.E., (1979), Complex seismic trace analysis, GEOPHYSICS, volume 44, n° 6, pages 1041 à 1063.

Cette méthode permet ainsi d'afficher l'attribut sismique sur l'horizon extrait en le "peignant" avec les couleurs correspondantes.

Le procédé venant d'être décrit permet ainsi de définir des valeurs d'extraction d'un horizon prédéterminé correspondant à une donnée réelle, mais uniquement dans un voisinage conditionnel du point P(ij,k) le plus proche du point «graine» P(i,j,t) choisi.

Pour propager le procédé d'extraction à l'ensemble de la matrice bidimensionnelle définie à l'étape 101, on construit tout d'abord un ensemble de nouvelles graines constitué par les nouveaux points P(p,q,t + $h_{ij,pq,k}$) situé sur l'horizon qui viennent d'être déterminés et est stocké dans les emplacements (p,q) correspondants de la matrice bidimensionnelle défini à l'étape 101. Chacun de ses points est mémorisé à l'étape 106, pour être réinjecté à l'étape 102, en y servant de nouveau point «graine» .

Ceci propage le traitement successivement à l'ensemble de la matrice bidimensionnelle correspondant aux géophones.

Lorsque qu'aucune nouvelle graine ne peut être trouvée, le procédé est orienté à l'étape 106 vers une étape 107 de visualisation sur écran des horizons ou des attributs ou propriétés associées d'horizon géologique, de manière à permettre une visualisation en couleur ou en niveaux de gris des propriétés associées à l'horizon géologique extrait correspondant au temps réel t.

Ainsi, à la fin de l'algorithme défini en référence à la figure 6, la matrice bidimensionnelle de l'étape 101, contient une pluralité de points correspondant au même horizon que le point initial «graine» choisit P(i,j,t).

L'ensemble des points peut être réordonné avec ses voisins, conformément à la figure 7 pour définir un maillage recouvrant entièrement l'horizon contenant le point «graine» P(i,j,t), ce maillage permet ainsi de représenter l'horizon extrait comme une surface localement continue sur l'écran de visualisation d'une station de travail.

Le procédé selon l'invention est de préférence mis en oeuvre sur un dispositif comportant des moyens appropriés à la mise en oeuvre des étapes décrites en référence à la figure 6.

En particulier, un dispositif selon l'invention comporte des moyens de mémorisation nécessaires aux calculs successifs et les moyens de visualisation nécessaires à l'étape 107.

De préférence, un dispositif selon l'invention est un dispositif programmable commandé par un produit-programme d'ordinateur comportant des éléments de code de programme pour exécuter les étapes du procédé décrit en référence à la figure 6.

L'invention décrite en référence à plusieurs objets particuliers n'y est nullement limitée, mais couvre au contraire toute modification de forme et toute variante de réalisation dans le cadre de l'invention, tel que défini dans les revendications suivantes.

**Revendications**

1. Procédé pour extraire un horizon géologique et des propriétés associées d'une représentation sismique, dans lequel on construit une fonction continue $S_{ij,k}(t)$ par interpolation ou approximation des traces sismiques discrètes d'une matrice sismique tridimensionnelle, ladite fonction étant désignée comme « trace sismique locale continue », comportant les étapes suivantes :

   a) utiliser comme décalage (vertical) optimal de deux traces sismiques locales continues voisines, la valeur de décalage rendant maximale leur fonction de corrélation, ce décalage optimal n'étant pas contraint à être un multiple entier du pas d'échantillonnage vertical ;
   b) retenir comme voisinage conditionnel d'une trace sismique locale continue « centrale » $S_{ij,k}(t)$ le sous-voisinage consistant en des traces voisines $S_{pq,k}(t)$ correspondant à des décalages optimaux $h_{ij,pq,k}$ associés à des corrélations $R_{ij,pq,k}(h_{ij,pq,k})$ supérieures à un seuil prédéterminé compris entre 0 et 1 ;
   c) construire une matrice bidimensionnelle d'extraction en choisissant un point « graine » P(i,j,t), en déterminant le point P(i,j,k) de la matrice sismique tridimensionnelle verticalement le plus proche et en remplissant la matrice bidimensionnelle d'extraction par des points extraits appartenant au même horizon que celui passant par le point graine de manière que l'emplacement (p,q) de la matrice bidimensionnelle stocke le point P(p, q, t + $h_{ij,pq,k}$); et
   d) estimer les propriétés associées à chaque point de la matrice d'extraction à l'aide de l'équation de la trace sismique continue locale $S_{pq,k}(t)$.

2. Procédé selon la revendication 1, dans lequel on utilise comme point « graine » de l'étape c) tous les points nouvellement stockés dans la matrice bidimensionnelle et non encore utilisés comme point graine.

3. Procédé selon la revendication 1 ou 2, dans lequel on remplit successivement le contenu de la matrice bidimensionnelle de l'étape c) au cours des itérations successives d'extraction.

4. Procédé selon la revendication 1 ou 2, dans lequel on remplace successivement le contenu de la matrice bidimensionnelle de l'étape c) par une moyenne des contenus successifs au cours des itérations successives d'extraction.

5. Procédé selon la revendication 1 ou 2, dans lequel la propriété de subsurface extraite est un ensemble d'attributs sismiques calculés en chaque point extrait sur l'horizon passant par le point graine, le calcul de ces attributs étant lui-même réalisé simultanément à l'extraction de ces points.

6. Procédé selon la revendication 1 ou la revendication 5, dans lequel on visualise sur un écran de visualisation les attributs sismiques « peints » sur l'horizon extrait.

7. Dispositif pour la mise en oeuvre du procédé selon l'une quelconque des revendications 1 à 4, comportant des moyens pour utiliser comme décalage optimal de deux traces sismiques locales continues voisines, la valeur de décalage rendant maximale leur fonction de corrélation, des moyens pour retenir comme voisinage conditionnel d'une trace sismique locale continue « centrale » de référence $S_{ij,k}(t)$ le sous-voisinage consistant en des traces voisines $S_{pq,k}(t)$ correspondant à des décalages optimaux $h_{ij,pq,k}$ associés à des corrélations $R_{ij,pq,k}(h_{ij,pq,k})$ supérieures à un seuil prédéterminé compris entre 0 et 1, des moyens pour construire une matrice bidimensionnelle d'extraction en choisissant un point « graine » P(i,j,t), en déterminant le point P(i,j,k) de la matrice sismique tridimensionnelle verticalement le plus proche et en remplissant la matrice bidimensionnelle d'extraction par des points extraits appartenant au même horizon que celui passant par le point graine de manière que l'emplacement (p,q) de la matrice bidimensionnelle stocke le point P(p, q, t + $h_{ij,pq,k}$) et des moyens pour estimer les propriétés associées à chaque point de la matrice d'extraction à l'aide de l'équation de la trace sismique continue locale $S_{pq,k}(t)$.

8. Dispositif selon la revendication 7, comportant des moyens de mémorisation et des moyens de visualisation de paramètres sismiques déterminés à l'aide du procédé selon l'une quelconque des revendications 1 à 6.

9. Produit-programme d'ordinateur, comportant des éléments de code de programme pour exécuter les étapes du procédé selon l'une quelconque des revendications 1 à 6, lorsque ledit programme est exécuté par un ordinateur.

**Patentansprüche**

1. Verfahren zum Extrahieren eines geologischen Horizonts und einer seismischen Darstellung zugeordneten Eigenschaften, bei dem eine kontinuierliche Funktion $S_{ij,k}(t)$ per Interpolation oder Näherung der diskreten seismischen Spuren einer dreidimensionalen seismischen Matrix aufgebaut wird, wobei die genannte Funktion als "kontinuierliche, lokale, seismische Spur" bezeichnet wird, umfassend die folgenden Schritte:

   a) Verwendung des Verschiebungswertes, der ihre Korrelationsfunktion maximal macht, als optimale (vertikale) Verschiebung von zwei benachbarten, kontinuierlichen, lokalen, seismischen Spuren, wobei diese optimale Verschiebung nicht zwingend ein ganzes Vielfaches der vertikalen Probennahme sein muss;
   b) Zurückhalten der Teil-Nachbarschaft, bestehend aus benachbarten Spuren $S_{pq,k}(t)$, die optimalen Verschiebungen $h_{ij,pq,k}$ entsprechen, die Korrelationen $R_{ij,pq,k}(h_{ij,pq,k})$ zugeordnet sind, die einen zwischen 0 und 1 inbegriffenen vorbestimmten Schwellenwert übersteigen, als bedingte Nachbarscheit einer "zentralen", kontinuierlichen, lokalen, seismischen Spur $S_{ij,k}(t)$;
   c) Aufbau einer zweidimensionalen Extraktionsmatrix durch Wahl eines "Korn"-Punktes $P(i,j,t)$ per Bestimmung des Punktes $P(i,j,k)$ der vertikal nächsten dreidimensionalen seismischen Matrix und durch Füllen der zweidimensionalen Extraktionsmatrix mit extrahierten Punkten, die zu demselben Horizont gehören wie dem, der an dem Kornpunkt derart vorbeiläuft, dass der Standort $(p,q)$ der zweidimensionalen Matrix den Punkt P $(p,q,t+h_{ij,pq,k})$ speichert; und
   d) Schätzung der jedem Punkt der Extraktionsmatrix zugeordneten Eigenschaften anhand der Gleichung der lokalen, kontinuierlichen, seismischen Spur $S_{pq,k}(t)$.

2. Verfahren gemäß Anspruch 1, bei dem als "Korn"-Punkt des Schritts c) alle neu in der zweidimensionalen Matrix gespeicherten und noch nicht als Kornpunkt verwendeten Punkt verwendet werden.

3. Verfahren gemäß Anspruch 1 oder 2, bei dem sukzessive der Inhalt der zweidimensionalen Matrix des Schritts c) im Verlauf der sukzessiven Extraktionsiterationen befüllt wird.

4. Verfahren gemäß Anspruch 1 oder 2, bei dem sukzessive der Inhalt der zweidimensionalen Matrix des Schritts c) durch einen Durchschnitt der sukzessiven Inhalte im Verlauf der sukzessiven Extraktionsiterationen ersetzt wird.

5. Verfahren gemäß Anspruch 1 oder 2, bei dem die Eigenschaft der extrahierten Teiloberfläche eine Gruppe von seismischen Attributen ist, die in jedem extrahierten Punkt auf dem durch den Kornpunkt hindurchlaufenden Horizont berechnet sind, wobei die Berechnung dieser Attribute selbst gleichzeitig mit der Extraktion dieser Punkte realisiert ist.

6. Verfahren gemäß Anspruch 1 oder Anspruch 5, bei dem auf einem Anzeigebildschirm die auf dem extrahierten Horizont "aufgemalten" seismischen Attribute angezeigt werden.

7. Vorrichtung für die Umsetzung des Verfahrens gemäß irgendeinem der Ansprüche 1 bis 4, umfassend Mittel zur Verwendung des Verschiebungswertes, der ihre Korrelationsfunktion maximal macht, als optimale Verschiebung von zwei benachbarten, kontinuierlichen, lokalen, seismischen Spuren, Mittel zum Festhalten der Teil-Nachbarschaft, die aus benachbarten Spuren $S_{pq,k}(t)$ besteht, die optimalen Verschiebungen $h_{ij, pq\ k}$ entsprechen, die einen zwischen 0 und 1 inbegriffenen vorbestimmten Schwellenwert übersteigenden Korrelationen $R_{ij,pq,k}(h_{ij,pq,k})$ zugeordnet sind, als bedingte Nachbarschaft einer "zentralen", kontinuierlichen, lokalen, seismischen Referenzspur $S_{ij,k}(t)$, Mittel zum Aufbau einer zweidimensionalen Extraktionsmatrix durch die Wahl eines "Korn"-Punkts $P(i,j,t)$, durch Bestimmung des Punktes $P(i,j,k)$ der nächsten vertikal dreidimensionalen seismischen Matrix und durch Befüllen der zweidimensionalen Extraktionsmatrix mit extrahierten Punkten, die zu demselben Horizont gehören wie der, der durch den Kornpunkt derart hindurchläuft, dass der Standort $(p,q)$ der zweidimensionalen Matrix den Punkt $P(p,q,t+h_{ij,pq,k})$ und die Mittel zum Schätzen der jedem Punkt der Extraktionsmatrix zugeordneten Eigenschaften anhand der Gleichung der lokalen, kontinuierlichen seismischen Spur $S_{pq,k}(t)$ speichert.

8. Vorrichtung gemäß Anspruch 7, umfassend Speichermittel und Anzeigemittel von seismischen Parametern, die anhand des Verfahrens gemäß irgendeinem der Ansprüche 1 bis 16 bestimmt werden.

9. Computerprogrammprodukt, umfassend Programmcodeelemente zur Ausführung der Schritte des Verfahrens gemäß irgendeinem der Ansprüche 1 bis 6, wenn das genannte Programm durch einen Computer ausgeführt wird.

**Claims**

1. A method for extracting a geological horizon and associated properties of a seismic representation, wherein a continuous function $S_{ij,k}(t)$ is constructed by interpolating or approximating discrete seismic traces of a three-dimensional seismic matrix, said function being designated as a "continuous local seismic trace", including the following steps of:

   a) using as an optimum (vertical) offset of two neighbouring continuous local seismic traces, the offset value making their correlation function a maximum, this optimum offset not being required to be an integer multiple of the vertical sampling interval;

   b) retaining as a conditional neighbourhood of a "central" continuous local seismic trace $S_{ij,k}(t)$ the sub-neighbourhood consisting of neighbouring traces $S_{pq,k}(t)$ corresponding to optimum offsets $h_{ij,pq,k}$ associated with correlations $R_{ij,pq,k}$ ($h_{ij,pq,k}$) higher than a predetermined threshold between 0 and 1;

   c) constructing a two-dimensional extraction matrix by choosing a "seed" point $P(i,j,t)$, by determining the point $P(i,j,k)$ of the vertically closest three-dimensional seismic matrix and by filling the two-dimensional extraction matrix by extracted points belonging to the same horizon as the one passing through the seed point such that the location (p,q) of the two-dimensional matrix stores the point $P(p,q,t + h_{ij,pq,k})$; and

   d) estimating the properties associated with each point of the extraction matrix using the equation of the local continuous seismic trace $S_{pq,k}(t)$.

2. The method according to claim 1, wherein all the points newly stored in the two-dimensional matrix and not yet used as a seed point are used as a "seed" point of step c).

3. The method according to claim 1 or 2, wherein the content of the two-dimensional matrix of step c) is successively filled during the successive extraction iterations.

4. The method according to claim 1 or 2, wherein the content of the two-dimensional matrix of step c) is successively replaced by an average of the successive contents during the successive extraction iterations.

5. The method according to claim 1 or 2, wherein the extracted sub-surface property is a set of seismic attributes calculated at each extracted point on the horizon passing through the seed point, the calculation of these attributes being itself made simultaneously to the extraction of these points.

6. The method according to claim 1 or claim 5, wherein the seismic attributes "painted" on the extracted horizon are visualized on a visualization screen.

7. A device for implementing the method according to any of claims 1 to 4, including means for using as an optimum offset of two neighbouring continuous local seismic traces, the offset value making their correlation function a maximum, means for retaining as a conditional neighbourhood of a reference "central" continuous local seismic trace $S_{ij,k}(t)$ the sub-neighbourhood consisting of neighbouring traces $S_{pq,k}(t)$ corresponding to optimum offsets $h_{ij,pq,k}$ associated with correlations $R_{ij,pq,k}$ ($h_{ij,pq,k}$) higher than a predetermined threshold between 0 and 1, means for constructing an two-dimensional extraction matrix by choosing a "seed" point $P(i,j,t)$, by determining the point $P(i,j,k)$ of the vertically closest three-dimensional seismic matrix and by filling the two-dimensional extraction matrix by extracted points belonging to the same horizon as that passing through the seed point such that the location (p,q) of the two-dimensional matrix stores the point $P(p,q,t + h_{ij,pq,k})$ and means for estimating the properties associated with each point of the extraction matrix using the equation of the local continuous seismic trace $S_{pq,k}(t)$.

8. The device according to claim 7, comprising means for storing and means for visualizing seismic parameters determined using the method according to any of claims 1 to 6.

9. A computer program product, comprising program code elements for executing the steps of the method according to any of claims 1 to 6, when said program is executed by a computer.

FIG.1

FIG.2

FIG.3

FIG.4

FIG.5

100 — MOD

101 — ATTRIB

102 — P ( i, j, t )

103 — P ( i, j, k )

104 — P(p,q,t) ← P(p,q,t + hij,pq,k)

106 — propag.

107 — VIZ

## FIG.6

$S_{ij,k}(t)$

$y = j$

$t_k - \Delta$

$x = i$

$S_{pq,k}(t)$ →

$t_k$

$t_k + \Delta$

t

## FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5615171 A

**Littérature non-brevet citée dans la description**

- **TANER M.T. ; KOEHLER F. ; SHERIFF R.E.** Complex seismic trace analysis. *GEOPHYSICS,* 1979, vol. 44 (6), 1041-1063